# EUROPÄISCHE PATENTSCHRIFT

(11) **EP 1 174 206 B1**
(45) Veröffentlichungstag und Bekanntmachung des Hinweises auf die Patenterteilung: **31.05.2006**
(21) Anmeldenummer: 01116521.4
(22) Anmeldetag: 07.07.2001
(51) Int. Cl.: B23D 55/04, B27B 31/00, B23D 53/04, B23D 59/00

(54) **Fördervorrichtung für Gehrungssägen**
Conveying installation for mitre saws
Installation de convoyage pour des scies à onglets

(30) Priorität: 14.07.2000 DE 10034244
(43) Veröffentlichungstag der Anmeldung: 23.01.2002
(73) Patentinhaber: KEURO Besitz GmbH & Co. EDV-Dienstleistungs KG, 77855 Achern (DE)
(72) Erfinder: Epple, Bertold, 77876 Kappelrodeck (DE)
(74) Vertreter: Blumenröhr, Dietrich

(56) Entgegenhaltungen:
- DE-A- 3 105 470
- DE-A- 3 127 748
- PATENT ABSTRACTS OF JAPAN vol. 017, no. 479 (M-1471), 31. August 1993 (1993-08-31) -& JP 05 116024 A (AMADA CO LTD), 14. Mai 1993 (1993-05-14)
- PATENT ABSTRACTS OF JAPAN vol. 1999, no. 13, 30. November 1999 (1999-11-30) -& JP 11 207521 A (AMADA CO LTD), 3. August 1999 (1999-08-03)
- PATENT ABSTRACTS OF JAPAN vol. 017, no. 449 (M-1465), 18. August 1993 (1993-08-18) -& JP 05 104325 A (AMADA CO LTD), 27. April 1993 (1993-04-27)

## Beschreibung

Die Erfindung betrifft eine Fördervorrichtung für Gehrungssägen, wobei die Fördervorrichtung an der Zufuhr- und/oder Abfuhrseite einer in der Horizontalebene schwenkbaren Gehrungssäge angeordnet ist und zum Transport des zu bearbeitenden Werkstücks zur Säge bzw. von der Säge weg dient, und wobei die Fördervorrichtung insbesondere senkrecht zur Förderrichtung horizontal verfahrbar angeordnet ist, um einem etwaigen Verschwenken der Säge ausweichen zu können.

Derartige Fördervorrichtungen bestehen üblicherweise aus Rollenbahnen, die sich möglichst nahe bis zur Schnittebene der Säge erstrecken, um das Stangenmaterial möglichst restlos verarbeiten zu können und somit selbst kürzeste Reststücke bzw. Anschnittstücke abtransportieren zu können. Wenn nun aber die Fördervorrichtung derart maschinennah angeordnet ist, erstreckt sie sich zumindest teilweise auch bis in den Verschwenkbereich der Gehrungssäge und würde diesen begrenzen, sofern die Fördervorrichtung nicht horizontal aus dem Verschwenkbereich heraus verfahrbar wäre.

Deshalb ist es im Stand der Technik bekannt, maschinennahe Fördervorrichtungen senkrecht zur Förderrichtung horizontal verfahrbar anzuordnen, wobei das horizontale Verfahren über einen Kettenantrieb erfolgt, der in Abhängigkeit des Verschwenkungswinkels der Gehrungssäge die Verfahrbewegung der Fördervorrichtung durchführt. Da mit größer werdendendem Schwenkwinkel der Gehrungssäge die zu verarbeitende Werkstückbreite abnimmt, kann auch die zur Verfügung stehende Breite der Fördervorrichtung in entsprechendem Maße abnehmen, ohne dass dies zu einer wesentlichen Beeinträchtigung der Funktion von Säge und Fördervorrichtung führen würde. Auf der anderen Seite ist bei in der Ausgangsstellung befindlicher und nicht verschwenkter Gehrungssäge eine fast der gesamten Förderbreite entsprechende Materialbreite verarbeitbar, so dass das horizontale Verfahren der Fördervorrichtung auch nicht durch einfach schmälere werkzeugnahe Rollenbahnen umgangen werden könnte, die von vornherein und dauerhaft den Schwenkbereich der Gehrungssäge freilassen.

Hiervon ausgehend liegt der vorgehenden Erfindung die Aufgabe zugrunde, eine Fördervorrichtung für Gehrungssägen der eingangs genannten Art weiterzubilden und insbesondere deren Aufbau und Arbeitsverhalten zu vereinfachen.

Diese Aufgabe wird erfindungsgemäß durch eine Fördervorrichtung gemäß Anspruch 1 gelöst. Hierdurch kann man zumindest in der einen Versctiwenkrichtung einen Horizontalverfahrantrieb einsparen und darüber hinaus auch noch eine komplizierte Steuerung, die die Verschwenkbewegung der Säge beim horizontalen Verfahren der Fördervorrichtung berücksichtigt. Denn wird das horizontale Verfahren durch die Gehrungssäge selbst bzw. durch deren Schwenkantrieb durchgeführt, so ist das Ausmaß der Verfahrbewegung immer exakt an die Verschwenkbewegung der Gehrungssäge und somit an das nötige Maß angepasst.

Besonders vorteilhaft ist dieses Koppeln von Fördervorrichtung und Gehrungssäge dann, wenn die Fördervorrichtung unter Vorspannung an einem Anschlag in der Ausgangsstellung anliegt, wenn sie durch die Verschwenkbewegung der Säge in eine Ausweichstellung verfahrbar ist und durch ein die Vorspannung erzeugendes Antriebsmittel in entgegengesetzter Richtung in die Ausgangsstellung zurückverfahrbar ist. Hierdurch erhält man Verfahrbewegungen in beide Richtungen ohne separaten Verfahrantrieb; vielmehr reicht es aus, den Verschwenkantrieb der Gehrungssäge für die Verfahrbewegung in die eine Richtung und die Vorspannung eines Antriebsmittels für die Verfahrbewegung in die andere Richtung zu verwenden. Ähnlich wie der durch die Verschwenkbewegung zur Verfügung gestellte Verfahräntrieb in der einen Richtung sorgt auch die Vorspannung in der anderen Verfahrrichtung, die die Fördervorrichtung immer gegen die verschwenkte Gehrungssäge bzw. in der Ausgangsstellung gegen den Anschlag drückt, für eine exakt an die Gehrungssäge angepasste Position der Fördervorrichtung, so dass auch hier keine eigene Steuerung zur Bestimmung der Verfahrbewegung erforderlich ist.

Aus der JP-A-05116024 ist zwar bereits eine Gehrungssäge bekannt mit einer senkrecht zur Förderrichtung horizontal verfahrbaren einzelnen Rolle, einer sogenannten Auheberolle. Diese Rolle, die über einer Parallelogrammmechanismus an die Säge angekoppelt ist und so deren Drehbewegungen folgt, kann jedoch den zum Teil sehr große Zwischenraum zu einer angrenzenden Rollenbahn nicht überbrücken, so dass diese Gehrungssäge nicht zur Verarbeitung von kurzen Werkstücken, Reststücken etc, verwendet werden kann.

Besonders vorteilhaft ist es, wenn das die Vorspannung erzeugende Antriebsmittel eine Spannstation ist, die die Vorspannkraft mit Hilfe eines über insbesondere eine Kette an der Fördervorrichtung angreifenden Gewichtes erzeugt, so dass dieses Antriebsmittel denkbar einfach gestaltet werden kann und auch die Vorspannkraft über die Lebensdauer der Fördervorrichtung nicht nachlässt bzw. problemlos nachstellbar ist.

Wie schon beim zuvor beschriebenen Stand der Technik besteht auch hier die Fördervorrichtung zweckmäßigerweise aus einer Rollenbahn mit mehreren angetriebenen Förderrollen, wobei die entfernter von der Säge angeordneten Förderrollen zur Kompensierung des seitlichen Verfahrens der Fördervorrichtung relativ zum eigentlichen Förderbereich breiter als die dem Förderbereich entsprechenden Rollenbahnen ausgeführt sein sollen. Hierdurch wird sichergestellt, dass selbst dann, wenn die Fördervorrichtung aufgrund der maschinennahen Förderrolle verfahren wird, die von der Säge weiter weg liegenden Förderrollen entsprechend dem maximalen Verschwenkwinkel der Gehrungssäge weiter in Richtung der verschwenkten Säge und somit in den eigentlichen Förderbereich vorstehen. Hierdurch erfolgt das Anordnen der Förderrollen der Rollenbahn mit getreppter bzw. abgestufter Außenkontur, um sich an die verschwenkte Gehrungssäge anlegen und somit den außerhalb des Verschwenkbereiches liegenden Förderbereich voll ausnutzen zu können.

Um das horizontale Verfahren der Fördervorrichtung zu vereinfachen, ist die Fördervorrichtung zweckmäßigerweise auf Linearführungen gelagert und über diese verfahrbar. Hierdurch sinkt der Rollwiderstand bzw. Verfahrwiderstand beträchtlich und trotz ungünstigster Hebelverhältnisse der an die Fördervorrichtung angreifenden verschwenkten Gehrungssäge wird die Verschwenkbewegung in eine horizontale Verfahrbewegung umgesetzt. Hierzu weist die Fördervorrichtung sinnvollerweise seitliche Abdrückmittel und insbesondere Abdrückrollen auf, die von der Säge während des Verschwenkes beaufschlagbar sind und zur Übertragung der Verschwenkbewegung auf die horizontal verfahrbare Fördervorrichtung dient.

Weitere Merkmale und Vorteile der vorliegenden Erfindung ergeben sich aus der nachfolgenden Beschreibung eines Ausführungsbeispiels anhand der Zeichnung; hierbei zeigen
- Figur 1: eine Gehrungssäge mit erfindungsgemäßer Fördervorrichtung in Seitenansicht;
- Figur 2: die in der Ausgangsstellung befindliche Gehrungssäge mit zufuhr- und abfuhrseitigen Fördervorrichtungen aus Figur 1 in Draufsicht;
- Figur 3: die Gesamtheit aus Gehrungssäge und Fördervorrichtungen aus Figur 2 in der um + 45° ausgelenkten Position der Gehrungssäge; und
- Figur 4: die Gesamtheit aus Gehrungssäge und Fördervorrichtungen aus Figur 2 in der um - 60° ausgelenkten Position der Gehrungssäge.

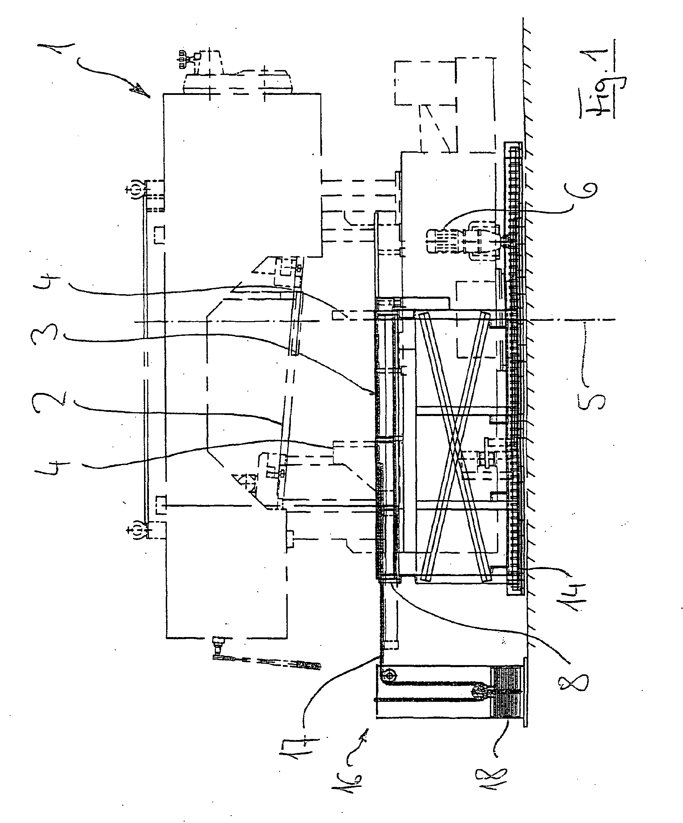

Figur 1 zeigt eine Gehrungssäge 1, die als Horizontalbandsäge ausgeführt ist, in Seitenansicht. Die Gehrungssäge weist ein um wenige Grade gegenüber der Horizontalen schräggestelltes Sägeband 2 auf, welches in der Schrägstellung insbesondere zur Optimierung des Sägens von Flach-, Vierkant- und Profilmaterial dient. Zur Festlegung des (in Figur 1 nicht dargestellten) zu bearbeitenden Werkstückes, welches auf einem Werkstücktisch 3 positioniert wird, ist ein Spannstock 4 vorgesehen. Die in Figur 1 rechte Spannbacke fällt mit einer Vertikalachse 5 zusammen, um welche die Gehrungssäge zur Erzeugung schräger Sägeschnitte verschwenkbar ist.

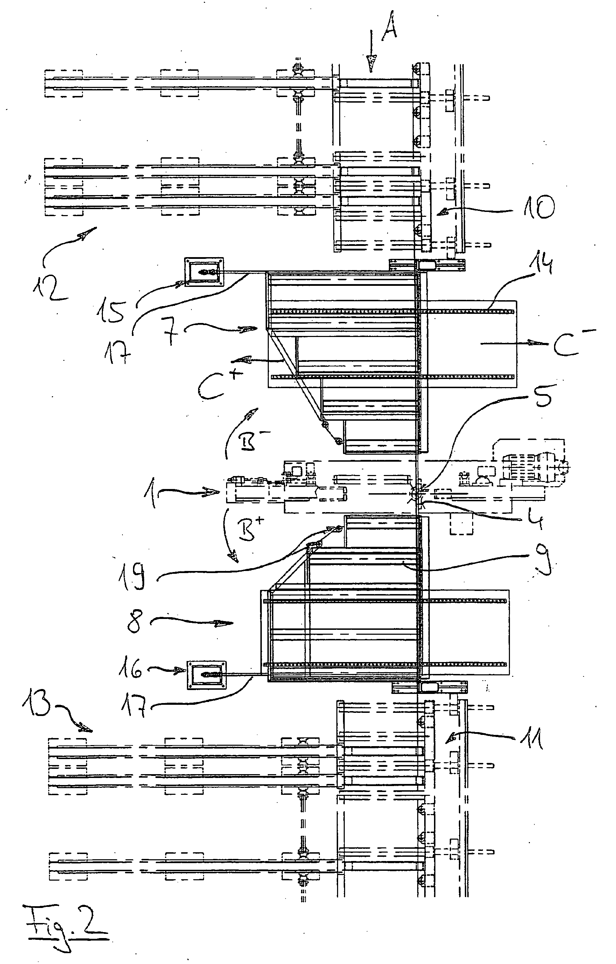

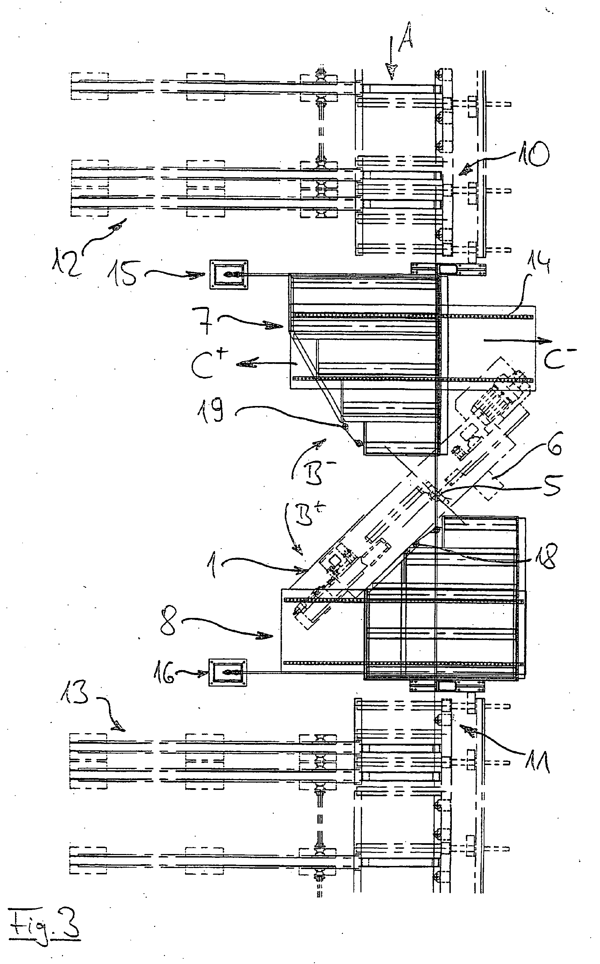

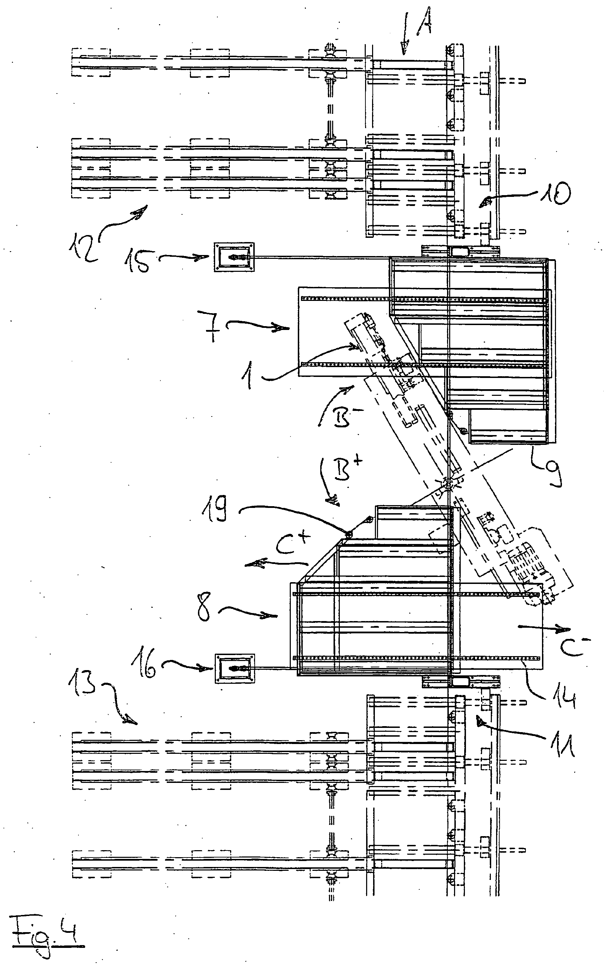

Die Schwenkbewegung der Gehrungssäge, die insbesondere aus den Figuren 2 bis 4 ersichtlich ist, wird über einen Schwenkantrieb 6 hervorgerufen. Hierbei ist die Gehrungssäge relativ zur Förderrichtung um bis zu + 45° in der einen Richtung und um bis zu - 60° in der anderen Richtung gegenüber der in Figur 2 dargestellten Ausgangsstellung schwenkbar. In dieser Ausgangsstellung führt die Gehrungssäge einen 90°-Schnitt durch und arbeitet hier wie eine übliche Bandsägemaschine für Geradschnitte.

Aus den Figuren 2 bis 4 sind nun eine zufuhrseitige Fördervorrichtung 7 und eine abfuhrseitige Fördervorrichtung 8 erkennbar, die jeweils aus einer Rollenbahn mit mehreren angetriebenen Förderrollen 9 bestehen. Jeweils angrenzend an die Fördervorrichtungen sind zufuhrseitig und abfuhrseitig feststehende Rollenbahnen 10, 11 vorgesehen sowie Magazineinrichtungen 12, 13 zur Aufbewahrung der zu verarbeitenden bzw. bearbeiteten Werkstücke.

Die Fördervorrichtungen 7 und 8 sind jeweils auf Linearführungen 14 gelagert und über diese in Horizontalrichtung senkrecht zur durch Pfeil A in den Figuren 2 bis 4 angedeuteten Förderrichtung verfahrbar, um der durch Pfeil B in den Figuren 2 bis 4 angedeuteten Schwenkbewegung der Gehrungssäge 1 auszuweichen.

Zur Verdeutlichung der Schwenk- und Verfahrbewegungen sind in den Figuren 2 bis 4 die Pfeile B aufgegliedert in einen Pfeil B⁺ zur Andeutung einer Schwenkbewegung der Gehrungssäge entgegen dem Uhrzeigersinn und in Richtung der Förderrichtung A und einen Fall B⁻ zur Verdeutlichung einer Schwenkbewegung im Uhrzeigersinn und entgegen der Förderrichtung A. Ebenso ist die horizontale Verfahrbewegung der Fördervorrichtungen 7 und 8 durch einen Pfeil C angedeutet, der zerlegt ist in einen Pfeil C⁻ für eine Bewegung aus der in Figur 2 dargestellten Ausgangsstellung heraus in eine Ausweichstellung und einen Pfeil C⁺ für die Bewegung aus der Ausweichstellung zurück in Richtung der Ausgangsstellung.

Die Förderrollen 9 der Fördervorrichtungen 7 und 8 sind zur Anpassung an den Schwenkbereich der Gehrungssäge 1 mit zunehmender Breite und abgestufter Außenkontur ausgeführt; das heißt je weiter weg die Förderrollen 9 der Fördervorrichtungen 7 und 8 von der Gehrungssäge 1 liegen, umso breiter sind sie, wobei sie auch breiter sind als die Förderrollen der fest stehenden Rollenbahnen 10 und 11, um das seitliche Verfahren in Richtung des Pfeils C⁻ kompensieren zu können. Insgesamt bildet die abgestufte Außenkontur der Fördervorrichtungen 7 und 8 eine der maximalen Verschwenkbewegung der Gehrungssäge entsprechende schräggestellte Kante, um hierdurch den Förderbereich außerhalb des Schwenkbereichs maximal nutzen zu können.

Die seitlichen Verfahrbewegungen der Fördervorrichtungen 7 und 8 werden wie folgt erzeugt: Durch eine Spannstation 15, 16, die jeweils einer der beiden Fördervorrichtungen zugeordnet ist, werden die Fördervorrichtungen in Richtung C⁺ gegen einen Anschlag in die Ausgangsstellung gedrückt und liegen an diesem Anschlag unter Vorspannung an. Wird nun die Gehrungssäge 1 in Richtung B⁺ oder B⁻ gegen eine der beiden Fördervorrichtungen verschwenkt, beaufschlagt die Säge mit ihrer Seitenfläche eine Abdrückrolle 19, die gegenüber den Seitenflächen der Fördervorrichtung vorsteht und dazu dient, die Schwenkbewegung der Säge an die Fördervorrichtung weiterzugeben. Durch die direkte Anlage der Säge an der Abdrückrolle bzw. an mehreren Abdrückrollen und somit an der Fördervorrichtung führt dazu, dass bei Fortsetzen der Schwenkbewegung die zugehörige Fördervorrichtung in Richtung C⁻ verfahren wird entgegen der Vorspannkraft, wobei diese Vorspannung dafür sorgt, dass die Fördervorrichtung und die zugehörigen Abdrückrollen immer in Anlage an der Seitenfläche der Säge befindlich sind und dies solange, bis die Säge wieder zurückgeschwenkt und die Fördervorrichtung in Richtung C⁺ gegen den Anschlag in die Ausgangsstellung verfahren ist.

Der Aufbau der Spannstationen 15, 16 ist insbesondere aus Figur 1 ersichtlich, wo eine an der Fördervorrichtung 8 angelenkte Kette 17 und über Umlenkrollen an der Kette 17 aufgehängte Gewichte 18 erkennbar sind. Die Gewichte 18 ziehen aufgrund ihrer nach unten wirkenden Gewichtskraft die Kette 17 relativ zu Figur 1 nach links und somit die Fördervorrichtung 8 gegen den zuvor erwähnten Anschlag.

Die Linearführungen 14, die einen äußerst geringen Rollwiderstand aufweisen, begünstigen dieses Antriebsprinzip der Fördervorrichtungen, indem zum einen der Verschwenkbewegung der Gehrungssäge kein allzu großer Widerstand beim Verfahren der Fördervorrichtungen entgegengesetzt wird und indem zum anderen die Gewichtskraft der Gewichte 18 ausreicht, um die Fördervorrichtungen unter Vorspannung gegen den der Ausgangsstellung entsprechenden Anschlag zu drücken.

Zusammenfassend bietet die vorliegende Erfindung den Vorteil, dass herkömmliche Fördervorrichtungen für Gehrungssägen mit einfachstem Aufbau und Aufwand hergestellt bzw. betrieben werden können und insbesondere ohne separaten Verfahrantrieb und separate Steuerung zur Ansteuerung dieses Verfahrantriebs. Hierdurch lassen sich die Herstellungskosten der bekannten maschinennahen Rollenbahnen, die als Fördervorrichtung für Gehrungssägen fungieren, erheblich reduzieren.

## Patentansprüche

1. Fördervorrichtung für Gehrungssägen, wobei die Fördervorrichtung (7, 8) an der Zufuhr- und/oder Abfuhrseite einer in der Horizontalebene schwenkbaren Gehrungssäge (1) angeordnet ist und zum Transport des zu bearbeitenden Werkstücks zur Säge bzw. von der Säge weg dient, und wobei die Fördervorrichtung insbesondere senkrecht zur Förderrichtung (A) horizontal verfahrbar (C⁺, C⁻) angeordnet ist, um einem etwaigen Verschwenken (B⁺, B⁻) der Säge ausweichen zu können, **dadurch gekenntzeichnet, dass** die Fördervorrichtung (7, 8) aus einer Rollenbahn mit mehreren angetriebenen Förderrollen (9) besteht, und
dass das horizontale Verfahren (C⁺, C⁻) der Rollenbahn (7, 8) wenigstens zum Teil durch die Verschwenkbewegung (B⁺, B⁻) der Säge erfolgt.

2. Fördervorrichtung nach Anspruch 1,
**dadurch gekennzeichnet,**
**dass** die Fördervorrichtung (7, 8) unter Vorspannung an einem Anschlag in der Ausgangsstellung anliegt, dass die Fördervorrichtung durch die Verschwenkbewegung (B+, B-) der Säge (1) in eine Ausweichstellung verfahrbar ist, und dass die Fördervorrichtung durch ein die Vorspannung erzeugendes Antriebsmittel (15, 16) in entgegengesetzter Richtung in die Ausgangsstellung zurück verfahrbar ist

3. Fördervorrichtung nach Anspruch 2,
**dadurch gekennzeichnet,**
**dass** das die Vorspannung erzeugende Antriebsmittel (15, 16) eine Spannstation ist, die die Vorspannkraft mit Hilfe eines über insbesondere eine Kette (17) an der Fördervorrichtung (7, 8) angreifenden Gewichtes (18) erzeugt.

4. Fördervorrichtung nach Anspruch 1,
**dadurch gekennzeichnet,**
**dass** die entfernter von der Säge (1) angeordneten Förderrollen (9) zur Kompensiebung des seitlichen Verfahrens der Fördervorrichtung (7, 8) relativ zum eigentlichen Förderbereich breiter als die dem Förderbereich entsprechenden Rollenbahnneh (10, 11) ausgeführt sind.

5. Fördervorrichtung nach zumindest einem der vorstehenden Ansprüche,
**dadurch gekennzeichnet,**
**dass** beidseits der Säge (1) jeweils eine separat antreibbare Fördervorrichtung (7, 8) angeordnet ist.

6. Fördervorrichtung nach zumindest einem der vorstehenden Ansprüche,
**dadurch gekennzeichnet,**
**dass** die Fördervorrichtung (7, 8) auf Linearführungen (14) gelagert und über diese verfahrbar ist.

7. Fördervorrichtung nach zumindest einem der vorstehenden Ansprüche,
**dadurch gekennzeichnet,**
**dass** die Fördervorrichtung (7, 8) seitliche Abdrückmittel (17) und insbesondere Abdrückrollen aufweist, die von der Säge (1) während des Verschwenkens (B⁺, B⁻) beaufschlagbar sind und zur Übertragung der Verschwenkbewegung auf die horizontal verfahrbare (C⁺, C⁻) Fördervorrichtung dient.

## Claims

1. Conveyor device for mitre saws, the conveyor device (7, 8) being arranged on the supply and/or discharge side of a mitre saw (1) that is pivotable in the horizontal plane, and being used for the transport of the workpiece being processed to the saw and away from the saw, and the conveyor device being arranged so as to be horizontally displaceable (C⁺, C⁻) especially perpendicular to the transport direction (A) in order to be able to avoid any pivoting (B⁺, B⁻) of the saw,
**characterised in that**
the conveyor device (7, 8) consists of a roller conveyor having a plurality of driven conveyor rollers (9); and the horizontal movement (C⁺, C⁻) of the roller conveyor (7, 8) is effected at least partly by the pivoting movement (B⁺, B⁻) of the saw.

2. Conveyor device according to claim 1,
**characterised in that**
in the starting position the conveyor device (7, 8) is biased against a stop; the conveyor device is movable into an avoidance position by the pivoting movement (B⁺, B⁻) of the saw (1); and the conveyor device is movable in the opposite direction back into the starting position by a drive means (15, 16) which generates the bias.

3. Conveyor device according to claim 2,
**characterised in that**
the drive means (15, 16) generating the bias is a tensioning station which generates the biasing force with the aid of a weight (18) which acts on the conveyor device (7, 8) especially by means of a chain (17).

4. Conveyor device according to claim 1,
**characterised in that**
the conveyor rollers (9) arranged further away from the saw (1) are wider than the roller conveyors (10, 11) corresponding to the conveying region to compensate for the lateral movement of the conveyor device (7, 8) relative to the actual conveying region.

5. Conveyor device according to at least one of the preceding claims,
**characterised in that**
a separately drivable conveyor device (7, 8) is arranged on each side of the saw (1).

6. Conveyor device according to at least one of the preceding claims,
**characterised in that**
the conveyor device (7, 8) is mounted on linear guides (14) and is movable thereon.

7. Conveyor device according to at least one of the preceding claims,
**characterised in that**
the conveyor device (7, 8) has lateral push-off means (17), especially push-off rollers, which can be acted upon by the saw (1) during the pivoting (B⁺, B⁻) and serves for transmitting the pivoting movement to the horizontally displaceable (C⁺, C⁻) conveyor device.

## Revendications

1. Dispositif de convoyage pour des scies à onglets, sachant que le dispositif de convoyage (7, 8) est disposé sur le côté d'alimentation et/ou d'évacuation d'une scie à onglet (1) pouvant pivoter dans le plan horizontal et sert à apporter à la scie la pièce à travailler et à l'en évacuer, et sachant que le dispositif de convoyage est notamment disposé à déplacement horizontal (C⁺, C⁻) perpendiculairement à la direction de convoyage (A) afin de pouvoir éviter un éventuel pivotement (B⁺, B⁻) de la scie, **caractérisé en ce que** le dispositif de convoyage (7, 8) est constitué d'un convoyeur à rouleaux doté de plusieurs rouleaux de convoyeur entraînés (9), et **en ce que** le déplacement horizontal (C⁺, C⁻) du convoyeur à rouleaux (7, 8) s'effectue au moins pour partie par le mouvement de pivotement (B⁺, B⁻) de la scie.

2. Dispositif de convoyage selon la revendication 1, **caractérisé en ce que** le dispositif de convoyage (7, 8) s'applique sous précontrainte contre une butée dans la position initiale, **en ce que** le dispositif de convoyage peut être déplacé dans une position d'évitement par le mouvement de pivotement (B⁺, B⁻) de la scie, et **en ce que** le dispositif de convoyage peut être ramené en direction opposée dans la position initiale par un moyen d'entraînement (15, 16) produisant la précontrainte.

3. Dispositif de convoyage selon la revendication 2, **caractérisé en ce que** le moyen d'entraînement (15, 16) produisant la précontrainte est un poste de tension qui produit la force de précontrainte à l'aide d'un poids (18) agissant notamment par l'intermédiaire d'une chaîne (17) sur le dispositif de convoyage (7, 8).

4. Dispositif de convoyage selon la revendication 1, **caractérisé en ce que** les rouleaux de convoyeur (9) disposés plus loin de la scie (1) sont, afin de compenser le déplacement latéral du dispositif de convoyage (7, 8) par rapport à la zone de convoyage proprement dite, réalisés plus larges que les voies à rouleaux (10, 11) correspondant à la zone de convoyage.

5. Dispositif de convoyage selon au moins une des revendications précédentes, **caractérisé en ce qu'**un dispositif de convoyage (7, 8) respectif, pouvant être séparément entraîné, est disposé de part et d'autre de la scie (1).

6. Dispositif de convoyage selon au moins une des revendications précédentes, **caractérisé en ce que** le dispositif de convoyage (7, 8) est monté sur des guides linéaires (14) et peut être déplacé sur ces derniers.

7. Dispositif de convoyage selon au moins une des revendications précédentes, **caractérisé en ce que** le dispositif de convoyage (7, 8) présente des moyens de pression latéraux (17) et notamment des galets de pression, qui peuvent être sollicités par la scie (1) pendant le pivotement (B⁺, B⁻) et qui servent à transmettre le mouvement de pivotement sur le dispositif de convoyage pouvant être horizontalement déplacé (C⁺, C⁻).
